# FASCICULE DE BREVET EUROPEEN

(11) **EP 1 252 969 B1**
(45) Date de publication et mention de la délivrance du brevet: **17.01.2007**
(21) Numéro de dépôt: 01810409.1
(22) Date de dépôt: 25.04.2001
(51) Int. Cl.: B23Q 5/40, B23Q 11/00

(54) **Module à vis anti-choc**
Antriebsschraubenmodul mit Stossdämpfung
Anti - shock screw unit

(43) Date de publication de la demande: 30.10.2002
(73) Titulaire: TORNOS S.A., 2740 Moutier (CH)
(72) Inventeur: Schuettel, Patrick, 2762 Roches BE (CH); Dreier, Kurt, 2824 Vicques (CH)
(74) Mandataire: BOVARD AG

(56) Documents cités:
- JP-A- 1 092 054
- US-A- 2 011 486
- US-A- 4 827 787
- PATENT ABSTRACTS OF JAPAN vol. 1998, no. 13, 30 novembre 1998 (1998-11-30) & JP 10 202461 A (AMADA CO LTD), 4 août 1998 (1998-08-04)

## Description

L'invention se rapporte à un appareil de guidage en rotation d'un arbre fileté utilisé pour assurer le déplacement en translation d'un mobile associé à un écrou engagé sur cet arbre fileté, (voir par exemple US-A-4442725).

L'invention intéresse plus particulièrement un appareil de guidage en rotation d'un arbre fileté utilisé pour assurer le déplacement en translation d'un mobile associé à un écrou engagé sur cet arbre fileté, lequel arbre fileté a une certaine longueur et est, par l'une de ses extrémités opposées, associé à un appareil moteur d'entraînement en rotation autour de son axe longitudinal, de manière à permettre le déplacement en translation de l'écrou.

L'invention s'applique plus particulièrement, mais mon exclusivement à un appareil de guidage en rotation d'un arbre fileté utilisé pour, par une liaison mécanique avec l'écrou qu'il engage, assurer le déplacement en translation d'un chariot porte-outil sur une machine-outil, par exemple, une machine de tournage.

Notamment sur de telles machines le chariot peut, par exemple à la suite d'une fausse manoeuvre, être accidentellement amené à entrer en collision avec un obstacle, tel un autre chariot.

Lorsqu'il survient, un tel blocage impose des contraintes mécaniques particulièrement importantes, notamment, à l'écrou associé au chariot et à l'arbre fileté qui commande le déplacement dudit écrou.

Pour limiter les effets de telles contraintes mécaniques, il est connu d'équiper l'appareil moteur d'entraînement en rotation de l'arbre fileté autour de son axe longitudinal, d'un dispositif de détection de surcharge et d'interruption du fonctionnement de l'appareil moteur en cas de détection d'une telle surcharge.

Ces dispositifs ont leurs avantages, mais s'ils permettent d'arrêter effectivement l'appareil moteur, c'est indiscutablement après que d'importantes contraintes mécaniques se sont développées, notamment, entre l'arbre fileté et l'écrou.

Un résultat que l'invention vise à obtenir est un appareil de guidage en rotation d'un arbre fileté utilisé pour assurer le déplacement en translation d'un mobile associé à un écrou engagé sur cet arbre fileté lequel appareil permette de limiter, de manière drastique, la valeur de telles contraintes mécaniques.

De nombreuses machines outils mettent en oeuvre plusieurs ensembles chacun constitué d'un arbre fileté et d'un écrou et, plus particulièrement des ensembles connus sous le nom de "vis à billes".

Ces ensembles sont spécialement sensibles aux contraintes axiales développées lors des blocages précités, c'est à dire que ces contraintes peuvent affecter notablement leur fonctionnement au point qu'ils doivent être remplacés après avoir été trop fortement sollicités.

L'invention a pour objet un appareil de guidage du type précité, selon la revendication 1.

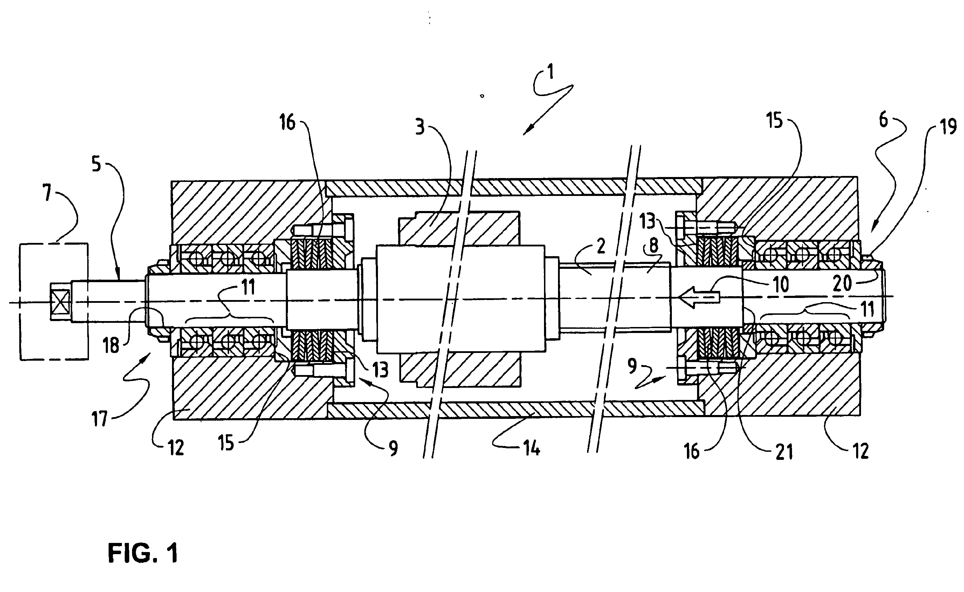

L'invention sera bien comprise à la lecture de la description ci-après faite à titre d'exemple non limitatif, en regard du dessin ci-annexé qui représente schématiquement un appareil de guidage en rotation d'un arbre fileté, selon l'invention, vu en coupe suivant un plan longitudinal.

En se reportant au dessin, on voit un appareil 1 de guidage en rotation d'un arbre fileté 2 utilisé pour assurer le déplacement en translation d'un mobile 3 associé à un écrou 4 engagé sur cet arbre fileté 2, lequel arbre fileté 2 a une certaine longueur et est, par l'une 5 de ses extrémités opposées 5, 6, associé à un appareil moteur 7 d'entraînement en rotation autour de son axe longitudinal 8, de manière à permettre le déplacement en translation de l'écrou 4.

De manière remarquable, l'appareil 1 comprend au moins un dispositif 9 d'absorption élastique d'une action 10 qui, orientée axialement à l'arbre fileté 2 et vers l'une quelconque de ses extrémités opposées 6, 5, est développée entre cet arbre fileté 2 et l'écrou 4 et dont la valeur est considérée comme susceptible d'altérer, notamment, des surfaces par lesquelles l'arbre fileté 2 et l'écrou 4 coopèrent.

Lorsqu'elle est conjuguée à l'utilisation d'un dispositif de détection de surcharge et d'interruption du fonctionnement de l'appareil moteur en cas de détection d'une telle surcharge, la présence dans l'appareil de guidage en rotation d'un dispositif 9 d'absorption élastique d'une action axiale 10 permet de limiter radicalement le risque d'altération de l'arbre fileté et de l'écrou.

L'homme du métier est à même d'apprécier la valeur de l'action axiale susceptible d'affecter l'arbre fileté et/ou l'écrou.

Notamment, les constructeurs de "vis à billes", c'est à dire d'ensembles arbre fileté et écrou dont l'écrou met en oeuvre une pluralité de billes circulant dans un chemin fermé, sont à même d'indiquer la valeur de la contrainte axiale maximale que peuvent supporter l'arbre fileté et l'écrou sans que cela crée un dommage préjudiciable à leur fonctionnement.

De préférence, l'appareil 1 de guidage est du type comprenant :
. deux éléments 11 de guidage en rotation de l'arbre fileté 2 autour de son axe longitudinal 8, ses éléments 11 étant chacun situé au niveau d'une extrémité 5, 6 de l'arbre fileté 2,
. deux boîtiers 12, d'une part, abritant chacun un des éléments de guidage 11 en rotation et, d'autre part, dont au moins un porte au moins une butée 13 d'arrêt en translation d'un élément 11 de guidage en rotation de l'arbre fileté 2 selon l'axe longitudinal 8 de l'arbre fileté 2,
. une structure 14 interposée entre les boîtiers 12 de manière à maintenir un écartement déterminé entre ces boîtiers 12.

L'homme du métier est à même de choisir les éléments 11 de guidage. Dans l'exemple représenté, chaque élément 11 de guidage comprend plusieurs roulements à billes à contact oblique, mais il pourrait s'agir de roulements d'autres types.

Dans ce cas, l'appareil 1 selon l'invention est remarquable en ce que
- les deux éléments 11 de guidage en rotation sont chacun guidé en translation dans le boîtier 12 qui les abrite,
- au moins l'un des deux éléments 11 de guidage en rotation,
   . est immobilisé en translation sur l'extrémité 5, 6 de l'arbre fileté 2 au niveau de laquelle il est disposé,
   . est d'un type à même de transmettre à au moins une butée 13 portée par son boîtier 12, au moins une action 10 qui, dite axiale, lui est appliquée par l'arbre fileté 2 et qui est, d'une part, orientée parallèlement à l'axe longitudinal 8 de cet arbre fileté 2 et, d'autre part, dirigée vers l'une des extrémités 5, 6 dudit arbre fileté 2,
   . présente au moins une surface 15, dite surface de transmission 15, qui est orientée pour transmettre l'action 10 axiale à ladite butée 13 du boîtier 12,
- le dispositif 9 d'absorption, d'une part, est interposé entre la butée 13 destinée à recevoir l'action axiale 10 et la surface de transmission 15 et, d'autre part, comprend au moins un élément 16 élastiquement compressible sous l'effet de l'action axiale 10.

L'homme du métier est à même de choisir l'élément élastique le plus approprié pour constituer chaque élément 16 élastiquement compressible sous l'effet d'une action axiale 10.

L 'appareil 1 selon l'invention est remarquable en ce que :
- l'une 6 des extrémités 5, 6 de l'arbre fileté 2,
   . est verrouillée en translation par rapport à l'élément 11 de guidage en rotation qu'elle porte, et ce, entre des butées opposées 19, 21 constituées sur l'arbre fileté 2,
   . s'appuie sur la butée 13 destinée à recevoir l'action axiale 10 par le biais du dispositif 9 d'absorption situé à cette extrémité 6,
- l'autre extrémité 5 de l'arbre fileté 2,
   . est immobilisée en translation de manière réglable par rapport à l'élément 11 de guidage en rotation qu'elle porte, et ce, d'une part, entre une butée 17 réglable constituée sur l'arbre fileté 2 et, d'autre part, le dispositif 9 d'absorption situé à cette extrémité 5.

L'une 19 des butées 19, 21 constituées sur l'arbre fileté 2 pour immobiliser l'extrémité 6 relativement à l'élément 11 de guidage en rotation qu'elle porte est constituée par un écrou 19 tandis que l'autre butée 21 est quant à elle constituée par un épaulement 21.

Dans ce cas, l'appareil 1 selon l'invention est également remarquable en ce que :
- il comprend des éléments 17 à 20 de mise en tension de l'arbre fileté 2 entre les deux dispositifs d'absorption 9, c'est à dire des éléments 17 à 20 qui, par appui au niveau desdits dispositifs 9 d'absorption permettent d'appliquer à l'arbre fileté 2 une précontrainte de traction déterminée,
- chaque élément 16 élastiquement compressible équipant un dispositif 9 d'absorption sous l'effet d'une action axiale 10 présente une résistance à la déformation élastique qui est choisie de manière telle que la précontrainte de traction peut être appliquée à l'arbre fileté 2 sans incidence sur le fonctionnement des dispositifs 9 d'absorption.

L'application d'une précontrainte de traction à un arbre permet de remédier à des inconvénients qui peuvent résulter de l'allongement de cet arbre par dilatation thermique.

Dans une forme avantageuse de réalisation de l'invention les éléments 17 à 20 de mise en tension de l'arbre fileté 2 entre les deux dispositifs d'absorption 9 consistent en :
- au moins une première portée 18 filetée réalisée à l'une première 5 des extrémités 5, 6 opposées de l'arbre fileté 2 et en au moins un premier élément taraudé 17 qui engagé sur cette première portée 18 filetée s'appuie par ailleurs sur le dispositif 9 d'absorption situé à cette première extrémité 5,
- au moins une butée 19, 20, qui, située à une seconde extrémité 6 des extrémités 5, 6 opposées de l'arbre fileté 2, s'appuie sur le dispositif 9 d'absorption situé à cette seconde extrémité 6.

L'indication selon laquelle le premier élément taraudé 17 qui équipe une première extrémité de l'arbre fileté 2, s'appuie par ailleurs sur le dispositif 9 d'absorption situé à cette première extrémité 5, doit être comprise dans son sens le plus large, à savoir, que l'appui est obtenu directement ou indirectement.

L'indication selon laquelle au moins une butée 19, 20 située à une seconde extrémité 6 des extrémités 5, 6 opposées de l'arbre fileté 2, s'appuie sur le dispositif 9 d'absorption situé à cette seconde extrémité 6, doit également, être comprise dans son sens le plus large, à savoir, que l'appui est obtenu directement ou indirectement.

Dans une forme de réalisation, chacune des extrémités 5, 6 de l'arbre fileté 2 présente une portée filetée 18, 20 sur laquelle est engagé un élément taraudé 17, 19.

De préférence, pour la mise en tension de l'arbre fileté, on procède uniquement depuis l'une de ces extrémités.

Selon une autre forme remarquable de réalisation de l'invention :
- les deux éléments 11 de guidage en rotation,
   . sont immobilisés en translation chacun sur l'une des extrémités 5, 6 de l'arbre fileté 2,
- l'un des boîtiers 12 porte deux butées 13 qui sont orientées,
   . une première pour recevoir une action axiale 10 orientée parallèlement à l'axe longitudinal 8 de l'arbre fileté 2 dirigée vers une première des extrémités 5, 6 dudit arbre fileté 2,
   . une deuxième pour recevoir une action axiale 10 orientée parallèlement à l'axe longitudinal 8 de l'arbre fileté 2 dirigée vers une deuxième des extrémités 5, 6 dudit arbre fileté 2,
- l'un de ces éléments 11,
   . est d'un type à même de transmettre chacune des deux actions axiales 10 à celle des deux butées 13 portées par son boîtier 12 qui est orientée pour la recevoir,
   . présente deux surfaces, dites surfaces de transmission 15, qui sont chacune orientée pour transmettre l'une des deux butées 13 du boîtier 12, l'action axiale 10 reçue de l'arbre fileté 2,
- le boîtier 12 qui porte les deux butées 13, contient deux dispositifs d'absorption 9, chaque dispositif d'absorption 9 comprenant au moins un élément élastiquement compressible sous l'effet de l'action axiale 10.

## Revendications

1. Appareil (1) de guidage en rotation d'un arbre fileté (2) utilisé pour assurer le déplacement en translation d'un mobile (3) associé à un écrou (4) engagé sur cet arbre fileté (2), lequel arbre fileté (2) a une certaine longueur et est, par l'une (5) de ses extrémités opposées (5, 6), associé à un appareil moteur (7) d'entraînement en rotation autour de son axe longitudinal (8), de manière à permettre le déplacement en translation de l'écrou (4),
cet appareil (1) comprenant
. deux éléments (11) de guidage en rotation de l'arbre fileté (2) autour de son axe longitudinal (8), ses éléments (11) étant chacun situé au niveau d'une extrémité (5, 6) de l'arbre fileté (2),
. deux boîtiers (12), d'une part, abritant chacun un des éléments de guidage (11) en rotation et, d'autre part, dont au moins un porte au moins une butée (13) d'arrêt en translation d'un élément (11) de guidage en rotation selon son axe longitudinal (8) de l'arbre fileté (2),
. une structure (14) interposée entre les boîtiers (12) de manière à maintenir un écartement déterminé entre ces boîtiers (12),
. au moins un dispositif (9) d'absorption élastique d'une action axiale (10) qui, orientée axialement à l'arbre fileté (2) et vers l'une quelconque de ses extrémités opposées (5, 6), est développée entre cet arbre fileté (2) et l'écrou (4) et dont la valeur est considérée comme susceptible d'altérer, notamment, des surfaces par lesquelles l'arbre fileté (2) et l'écrou (4) coopèrent,
cet appareil (1) étant **caractérisé en ce que** :
- les deux éléments (11) de guidage en rotation sont chacun guidé en translation dans le boîtier (12) qui les abrite,
- au moins l'un des deux éléments (11) de guidage en rotation,
. est immobilisé en translation sur l'extrémité (5, 6) de l'arbre fileté (2) au niveau de laquelle il est disposé,
. est d'un type à même de transmettre à au moins une butée (13) portée par son boîtier (12), au moins une action (10) qui, dite axiale, lui est appliquée par l'arbre fileté (2) et qui est, d'une part, orientée parallèlement à l'axe longitudinal (8) de cet arbre fileté (2) et, d'autre part, dirigée vers l'une des extrémités (5, 6) dudit arbre fileté (2),
. présente au moins une surface (15), dite surface de transmission (15), qui est orientée pour transmettre l'action (10) axiale à ladite butée (13) du boîtier (12),
- le dispositif (9) d'absorption, d'une part, est interposé entre la butée (13) destinée à recevoir l'action axiale (10) et la surface de transmission (15) et, d'autre part, comprend au moins un élément (16) élastiquement compressible sous l'effet de l'action axiale (10),
- l'une (6) des extrémités (5, 6) de l'arbre fileté (2),
. est verrouillée en translation par rapport à l'élément (11) de guidage en rotation qu'elle porte, et ce, entre des butées opposées (19, 21) constituées sur l'arbre fileté (2),
. s'appuie sur la butée (13) destinée à recevoir l'action axiale (10) par le biais du dispositif (9) d'absorption situé à cette extrémité (6),
- l'autre extrémité (5) de l'arbre fileté (2),
.est immobilisée en translation de manière réglable par rapport à l'élément (11) de guidage en rotation qu'elle porte, et ce, d'une part, entre une butée (17) réglable constituée sur l'arbre fileté (2) et, d'autre part, le dispositif (9) d'absorption situé à cette extrémité (5).

2. Appareil selon la revendication 1 **caractérisé en ce que** :
- il comprend des éléments (17 à 20) de mise en tension de l'arbre fileté (2) entre les deux dispositifs d'absorption (9), c'est à dire des éléments (17 à 20) qui, par appui au niveau desdits dispositifs (9) d'absorption permettent d'appliquer à l'arbre fileté (2) une précontrainte de traction déterminée,
- chaque élément (16) élastiquement compressible équipant un dispositif (9) d'absorption sous l'effet d'une action axiale (10) présente une résistance à la déformation élastique qui est choisie de manière telle que la précontrainte de traction peut être appliquée à l'arbre fileté (2) sans incidence sur le fonctionnement des dispositifs (9) d'absorption.

3. Appareil selon la revendication 2 **caractérisé en ce que** les éléments (17 à 20) de mise en tension de l'arbre fileté (2) entre les deux dispositifs d'absorption (9) consistent en :
- au moins une première portée (18) filetée réalisée à l'une première (5) des extrémités (5, 6) opposées de l'arbre fileté (2) et en au moins un premier élément taraudé (17) qui, engagé sur cette première portée (18) filetée, s'appuie par ailleurs sur le dispositif (9) d'absorption situé à cette première extrémité (5),
- au moins une butée (19, 20), qui située à une seconde extrémité (6) des extrémités (5, 6) opposées de l'arbre fileté (2), s'appuie le dispositif (9) d'absorption situé à cette seconde extrémité (6).

4. Appareil selon la revendication 1 **caractérisé en ce que** :
- les deux éléments (11) de guidage en rotation,
. sont immobilisés en translation chacun sur l'une des extrémités (5, 6) de l'arbre fileté (2),
- l'un des boîtiers (12) porte deux butées (13) qui sont orientées,
. une première pour recevoir une action axiale (10) orientée parallèlement à l'axe longitudinal (8) de l'arbre fileté (2) dirigée vers une première des extrémités (5, 6) dudit arbre fileté (2),
. une deuxième pour recevoir une action axiale (10) orientée parallèlement à l'axe longitudinal (8) de l'arbre fileté (2) dirigée vers une deuxième des extrémités (5, 6) dudit arbre fileté (2),
- l'un de ces éléments (11),
. est d'un type à même de transmettre chacune des deux actions axiales (10) à celle des deux butées (13) portées par son boîtier (12) qui est orienté pour la recevoir,
. présente deux surfaces, dites surfaces de transmission (15), qui sont chacune orientée pour transmettre à l'une des deux butées (13) du boîtier (12), l'action axiale (10) reçue de l'arbre fileté (2),
- le boîtier (12) qui porte les deux butées (13), contient deux dispositifs d'absorption (9), chaque dispositif d'absorption (9) comprenant au moins un élément élastiquement compressible sous l'effet de l'action axiale (10).

## Claims

1. Apparatus (1) for guiding a threaded spindle (2) in rotation, which spindle is used to ensure the displacement in translation of a mobile element (3) connected to a threaded female piece (4) engaged on this threaded spindle (2), which threaded spindle (2) has a certain length and is connected, by one (5) of its opposite ends (5, 6), to a motor device (7) for driving in rotation about its longitudinal axis (8) in such a way as to allow the displacement in translation of the threaded female piece (4),
this apparatus (1) comprising
• two elements (11) for guiding the threaded spindle (2) in rotation about its longitudinal axis (8), these elements (11) each being situated at the level of one end (5, 6) of the threaded spindle (2),
• two housings (12), each accommodating one of the elements (11) for guiding in rotation, and at least one of which bears at least one stop (13) for stopping in translation an element (11) for guiding of the threaded spindle (2) in rotation along its longitudinal axis (8),
• a structure (14) inserted between the housings (12) in such a way as to maintain a predetermined spacing between these housings (12),
• at least one device (9) for elastic absorption of an axial force (10) which force, directed axially with respect to the threaded spindle (2) and toward either one of its opposite ends (5, 6), arises between this threaded spindle (2) and the threaded female piece (4), and the value of which force is considered likely to distort in particular the surfaces by which the threaded spindle (2) and the threaded female piece (4) co-operate, this apparatus (1) being **characterised in that**:
- the two elements (11) for guiding in rotation are each guided in translation in the housing (12) which accommodates them,
- at least one of the two elements (11) for guiding in rotation
• is immobilized in translation on the end (5, 6) of the threaded spindle (2) at the level at which it is disposed,
• is of a type able to transmit to at least one stop (13) borne by its housing (12) at least one force (10) which, referred to as axial, is applied by the threaded spindle (2) and which is, on the one hand, directed parallel to the longitudinal axis (8) of this threaded spindle (2), and, on the other hand, directed toward one of the ends (5, 6) of said threaded spindle (2),
• has at least one surface (15), referred to as transmission surface (15), which is oriented to transmit the axial force (10) to said stop (13) of the housing (12),
- the absorption device (9) is, on the one hand, inserted between the stop (13), intended to receive the axial force (10), and the transmission surface (15), and, on the other hand, comprises at least one element (16) elastically compressible under the effect of the axial force (10),
- one (6) of the ends (5, 6) of the threaded spindle (2)
• is locked in translation with respect to the element (11) for guiding in rotation which it bears, and this between the opposite stops (19, 21) provided on the threaded spindle (2),
• rests on the stop (13) intended to receive the axial force (10) by means of the absorption device (9) situated on this end (6),
- the other end (5) of the threaded spindle (2)
• is immobilized in translation in a way adjustable with respect to the element (11) for guiding in rotation which it bears, and this, on the one hand, between an adjustable stop (17) provided on the threaded spindle (2), and, on the other hand, the absorption device (9) situated on this end (5).

2. Apparatus according to claim 1, **characterised in that**:
- it comprises elements (17 to 20) for tensioning the threaded spindle (2) between the two absorption devices (9), i.e. elements (17 to 20) which, by pressing at the level of said absorption devices (9), allow a prestressing of predetermined traction to be applied to the threaded spindle (2),
- each elastically compressible element (16) equipping an absorption device (9) under the effect of an axial force (10) has a resistance to elastic deformation which is selected such that the traction prestressing is able to be applied to the threaded spindle (2) without influencing the functioning of the absorption devices (9).

3. The apparatus according to claim 2, **characterised in that** the elements (17 to 20) for tensioning the threaded spindle (2) between the two absorption devices (9) comprise:
- at least a first threaded bearing surface (18) provided on the first (5) of the opposite ends (5, 6) of the threaded spindle (2) and at least a first threaded element (17) which, engaged on this first threaded bearing surface (18), moreover rests on the absorption device (9) situated at this first end (5),
- at least one stop (19, 20), which, situated at a second end (6) of the opposite ends (5, 6) of the threaded spindle (2) presses on the absorption device (9) situated at this second end (6).

4. The apparatus according to claim 2, **characterised in that**
- the two elements (11) for guiding in rotation
• are each immobilized in translation on one of the ends (5, 6) of the threaded spindle (2),
- one of the housings (12) bears two stops (13):
• a first being oriented to receive an axial force (10) directed parallel to the longitudinal axis (8) of the threaded spindle (2) and directed toward a first of the ends (5, 6) of said threaded spindle (2),
• a second being oriented to receive an axial force (10) directed parallel to the longitudinal axis (8) of the threaded spindle (2) and directed toward a second of the ends (5, 6) of said threaded spindle (2),
one of these elements (11)
• is of a type able to transmit each of the two axial forces (10) to that one of the two stops (13) borne by its housing (12) which is oriented to receive it,
• has two surfaces, referred to as transmission surfaces (15), which are each oriented to transmit to one of the two stops (13) of the housing (12) the axial force received from the threaded spindle (2),
- the housing (12), which bears the two stops (13), contains two absorption devices (9), each absorption device (9) comprising at least one element elastically compressible under the effect of the axial force (10).

## Patentansprüche

1. Drehendes Führungsgerät (1) einer Gewindewelle (2), die zur Ausführung der Translationsbewegung eines beweglichen Teils (3) benutzt wird, das mit einer auf dieser Gewindewelle (2) aufgeschraubten Mutter (4) verbunden ist, wobei die Gewindewelle (2) eine bestimmte Länge besitzt und an einem (5) ihrer voneinander abgewandten Enden (5, 6) mit einem um seine Längsachse (8) drehenden Motorantriebsgerät (7) verbunden ist, so dass dies die Translationsbewegung der Mutter (4) gestattet,
wobei dieses Gerät (1) aus Folgendem besteht:
- aus zwei Führungselementen (11) der Gewindewelle (2), die sich um die Längsachse (8) Letzterer drehen, wobei jedes dieser Elemente (11) an einem der Enden (5, 6) der Gewindewelle (2) angeordnet ist,
- aus zwei Gehäusen (12), von denen einerseits jedes eins der drehenden Führungselemente (11) aufnimmt und andererseits mindestens eins auf dem mindestens ein Endanschlag (13) für die Translationsbewegung des drehenden Führungselementes (11) in Richtung seiner Längsachse (8) der Gewindewelle (2) sitzt,
- aus einer Struktur (14), die so zwischen den Gehäusen (12) angeordnet ist, dass ein bestimmter Abstand zwischen diesen Gehäusen (12) eingehalten wird,
- aus mindestens einer Vorrichtung (9) zur elastischen Dämpfung einer Axialwirkung (10), die sich, axial entlang der Gewindewelle (2) und in Richtung eines der beiden voneinander abgewandten Enden (5, 6) verlaufend, zwischen dieser Gewindewelle (2) und der Mutter (4) entwickelt, und von deren Wert angenommen wird, dass er insbesondere die Flächen beschädigen kann, an denen die Gewindewelle (2) und die Mutter (4) zusammenwirken,
wobei dieses Gerät (1) **dadurch gekennzeichnet ist, dass**:
- jedes der beiden drehenden Führungselemente (11) bei der Translation in dem sie aufnehmenden Gehäuse (12) geführt werden,
- mindestens eines der beiden drehenden Führungselemente (11)
- bei der Translation an dem Ende (5, 6) der Gewindewelle (2) zum Stillstand gebracht wird, an dem es angeordnet ist,
- von solcher Art ist, dass es in der Lage ist, mindestens an einen in seinem Gehäuse (12) sitzenden Endanschlag (13) mindestens eine Wirkung (10), die sogenannte Axialwirkung (10), zu übertragen, mit der es von der Gewindewelle (2) beaufschlagt wird, und die einerseits parallel zur Längsachse (8) dieser Gewindewelle (2) ausgerichtet ist und andererseits in Richtung eines der beiden voneinander abgewandten Enden (5, 6) der genannten Gewindewelle (2) verläuft,
- mindestens eine Fläche (15), die sogenannte Übertragungsfläche (15), aufweist, die so ausgerichtet ist, dass sie die Axialwirkung (10) an den genannten Anschlag (13) des Gehäuses (12) überträgt,
- die Dämpfungsvorrichtung (9) ist einerseits zwischen dem zum Auffangen der Axialwirkung (10) bestimmten Anschlag (13) und der Übertragungsfläche (15) angeordnet und weist andererseits mindestens ein unter der Axialwirkung (10) elastisch zusammendrückbares Element (16) auf,
- bei einem (6) der Enden (5, 6) der Gewindewelle (2)
- die Translation zum drehenden Führungselement (11), das auf ihm sitzt, verriegelt ist, und dies zwischen den sich gegenüber liegenden, auf der Gewindewelle (2) ausgebildeten Anschlägen (19, 21),
- dieses sich über die an diesem Ende (6) befindliche Dämpfungsvorrichtung (9) auf dem zum Auffangen der Axialwirkung (10) bestimmten Anschlag (13) abstützt,
- bei dem anderen Ende (5) der Gewindewelle (2)
- seine Translation zum drehenden Führungselement (11), das auf ihm sitzt, verstellbar zum Stillstand gebracht wird, und dies einerseits zwischen einem verstellbaren Anschlag (17), der auf der Gewindewelle (2) ausgebildet ist, und andererseits einer an diesem Ende (5) befindliche Dämpfungsvorrichtung (9).

2. Gerät nach Anspruch 1, **dadurch gekennzeichnet, dass**:
- es Elemente (17 bis 20) zur Spannung der Gewindewelle (2) zwischen den beiden Dämpfungsvorrichtungen (9) aufweist, das heißt, Elemente (17 bis 20) die es durch Aufliegen auf den genannten Dämpfungsvorrichtungen (9) gestatten, die Gewindewelle (2) mit einer bestimmten Zugvorspannung zu beaufschlagen,
- jedes elastisch zusammendrückbare, eine Dämpfungsvorrichtung (9) ausstattende Element (16) unter einer Axialwirkung (10) einen Widerstand gegen elastische Verformung aufweist, der so gewählt ist, dass die Gewindewelle (2) ohne Beeinträchtigung der Funktion der Dämpfungsvorrichtungen (9) mit der Zugvorspannung beaufschlagt werden kann.

3. Gerät nach Anspruch 2, **dadurch gekennzeichnet, dass** die Elemente (17 bis 20) zur Spannung der Gewindewelle (2) zwischen den beiden Dämpfungsvorrichtungen (9) aus Folgendem bestehen:
- aus mindestens einer ersten Tragfläche (18) mit Außengewinde, die am ersten (5) der beiden voneinander abgewandten Enden (5, 6) der Gewindewelle (2) ausgebildet ist, und aus mindestens einem ersten Element (17) mit Innengewinde, das auf diese erste Tragfläche (18) mit Außengewinde montiert wird, und sich im Übrigen auf der an diesem Ende (5) befindlichen Dämpfungsvorrichtung (9) abstützt,
- aus mindestens einem an einem zweiten Ende (6) der voneinander abgewandten Enden (5, 6) der Gewindewelle (2) angeordneten Anschlag (19, 20), der sich auf der an diesem Ende (6) angeordneten Dämpfungsvorrichtung (9) abstützt.

4. Gerät nach Anspruch 1, **dadurch gekennzeichnet, dass**:
- bei beiden drehenden Führungselemente (11)
- die Translation jedes Führungselementes an einem Ende (5, 6) der Gewindewelle (2) zum Stillstand gebracht wird,
- auf einem der Gehäuse (12) zwei Anschläge (13) sitzen, die so ausgerichtet sind, dass
- der erste die parallel zur Längsachse (8) der Gewindewelle (2) verlaufende Axialwirkung (10) auffängt, die gegen ein erstes der beiden Enden (5, 6) der genannten Gewindewelle (2) gerichtet ist,
- der zweite die parallel zur Längsachse (8) der Gewindewelle (2) verlaufende Axialwirkung (10) auffängt, die gegen ein zweites der beiden Enden (5, 6) der genannten Gewindewelle (2) gerichtet ist,
- eines dieser Elemente (11)
- von solcher Art ist, dass es jede der beiden Axialwirkungen (10) an die beiden Anschläge (13) überträgt, welche auf dem zu deren Aufnahme ausgerichteten Gehäuse (12) sitzen,
- zwei Flächen, die sogenannten Übertragungsflächen (15), aufweist, die jeweils so ausgerichtet sind, dass sie an einen der beiden Anschläge (13) des Gehäuses (12) die von der Gewindewelle (2) empfangene Axialwirkung (10) übertragen,
- das Gehäuse (12), auf dem die beiden Anschläge (13) sitzen, zwei Dämpfungsvorrichtungen (9) enthält, wobei jede Dämpfungsvorrichtung (9) mindestens ein unter der Axialwirkung (10) elastisch zusammendrückbares Element aufweist.
